# EUROPÄISCHE PATENTSCHRIFT

(11) **EP 3 874 094 B1**
(45) Veröffentlichungstag und Bekanntmachung des Hinweises auf die Patenterteilung: **10.12.2025**
(21) Anmeldenummer: 19802094.3
(22) Anmeldetag: 30.10.2019
(51) Int. Cl.: E02F 3/36, E02F 9/00, E02F 9/22, F16L 27/087, F16L 39/04

(54) **VORRICHTUNG ZUM LEITEN VON HYDRAULIKFLÜSSIGKEIT**
DEVICE FOR CONDUCTING HYDRAULIC FLUID
DISPOSITIF POUR LA CONDUITE DE FLUIDE HYDRAULIQUE

(30) Priorität: 31.10.2018 DE 102018127295
(43) Veröffentlichungstag der Anmeldung: 08.09.2021
(73) Patentinhaber: HKS Dreh-Antriebe GmbH, 63607 Wächtersbach-Aufenau (DE)
(72) Erfinder: WEISGERBER, Marcel, 63607 Waechtersbach (DE); LOEHR, Markus, 63225 Langen (DE); KERN, Heiko, 63607 Waechtersbach (DE)
(74) Vertreter: Puschmann Borchert Kaiser Klettner Patentanwälte Partnerschaft mbB
(86) Internationale Anmeldenummer: PCT/EP2019/079733
(87) Internationale Veröffentlichungsnummer: WO 2020/089335

(56) Entgegenhaltungen:
- EP-A1- 1 950 353
- DE-U1- 202010 018 347
- US-A- 3 243 905
- US-A- 3 966 249
- US-A- 4 717 191

## Beschreibung

Die Erfindung betrifft eine Vorrichtung zum Leiten von Hydraulikflüssigkeit gemäß der im Oberbegriff des Patentanspruchs 1 angegebenen Art sowie einen Drehmotor mit dieser Vorrichtung.

Hydraulische Drehdurchführungen sind bekannt und ermöglichen Hydraulikfluiden den abgedichteten Übergang zwischen einem feststehenden Körper und einem rotierenden Körper oder zwischen gegeneinander rotierenden Körpern. Drehdurchführungen können einflutig (einkanalig) oder mehrflutig (mehrkanalig) sein. Wenn Hydraulik-Flüssigkeiten unter hohem Druck hin- und hergeführt werden müssen, braucht man in der Regel paarige Drehdurchführungen. Derartige hydraulische Durchführungen sind in der Hydraulik zwar bekannt, als nachrüstbares Anbauteil für Baggerwerkzeuge, welches den speziellen Anforderungen bei Materialbewegung berücksichtigt, jedoch nicht konzipiert.

Ein Beispiel einer integrierten Drehdurchführung bei einem Baggerwerkzeug ist aus der EP 1 950 353 A1, der US 4 717 191 A, der US 3 966 249 A und der US 3 243 bekannt.

Ein Drehmotor ist auch unter dem Begriff Schwenkmotor, Drehantrieb oder Drehzylinder bekannt.

Auf der anderen Seite sind Hecklader, Bagger und ähnliche Fahrzeugtypen - im Folgenden nur Bagger genannt - mit einem ausfahrbaren oder gelenkigen Baggerarm bekannt. Der Baggerarm ist mit einem Werkzeug versehen, beispielsweise mit einer Schaufel, das am Ende des Baggerarms entfernt vom Bediener befestigt ist. Zudem können auch ein Drehmotor mit dem Baggerarm und die Schaufel mit dem Drehmotor verbunden sein. Mit einer derartigen Anordnung kann die Schaufel relativ zum Baggerarm in einer vertikalen Ebene um eine Drehachse rotieren.

Aus der DE 20 2006 003 589 U1 ist ein solcher Drehmotor bekannt, der vorzugsweise als Schwenkantrieb für Baumaschinen, Hebezeuge, Lastwagen und dergleichen eingesetzt wird. Dieser Drehmotor weist ein längliches, etwa rohrförmiges Gehäuse, zumindest einen in dem Gehäuse axial verschieblich aufgenommenen Kolben, der durch Beaufschlagung mit einem Druckmedium in einer Druckkammer axial antreibbar ist, sowie zumindest eine in dem Gehäuse axial fest um eine Drehachse drehbar aufgenommene Motorwelle auf. Der Kolben ist mit einer Wellendurchgangsausnehmung versehen, mit der der Kolben axial verschieblich auf der Motorwelle sitzt.

Bei solchen Drehmotoren wird die Axialbewegung des Kolbens, der über entsprechende Druckkammern mit einem Druckmedium beaufschlagbar ist, in eine Verdrehung der Motorwelle gegenüber dem Gehäuse bzw. des Gehäuses gegenüber der Motorwelle umgesetzt. Üblicherweise steht hierzu die Motorwelle mit dem Kolben in Schraubeingriff, der wiederum verdrehfest gegenüber dem Gehäuse geführt ist. Die Erfindung bezieht sich jeweils auf derartige Drehmotoren.

Einen solchen Drehmotor zeigt beispielsweise die DE 201 07 206 A, gemäß der der Kolben einerseits drehfest an der Innenmantelfläche des kreiszylindrischen Gehäuses geführt ist und andererseits auf einem Gewindeabschnitt der Motorwelle in Schraubeingriff steht. Wird der Kolben durch Hydraulik- oder Pneumatikbeaufschlagung in dem Gehäuse axial verschoben, wird seine Axialbewegung über den Schraubeingriff in eine Drehbewegung der Motorwelle umgesetzt.

Aus der DE 20 2010 018 347 U1 ist ein Drehmotor bekannt, der zudem mit einer Hydrauliköldurchführung für beispielsweise einen Schnellwechsler versehen ist. Dieser Drehmotor ist mit einer integrierten Hydrauliköldurchführung versehen. Derartige Kolbenkonstruktionen sind jedoch hinsichtlich der Baugröße nachteilig und mit hohem Fertigungsaufwand verbunden. Zudem wird die ganze Konstruktion äußerst schwergewichtig, wodurch der Einsatzbereich eingeschränkt wird.

Zudem wird in dieser Druckschrift offenbart, eine Ölstopfbuchse zur Hydraulikölüberbrückung eines Drehmotors von einem Ende eines Baggerstils zu einem Schnellwechsler zu verwenden und seitlich an den Drehmotor zu befestigen. Die Ölstopfbuchse weist ein zylindrisches Innenelement auf, das zur Rotation mit einer Welle eines Drehmotors durch einen Bolzen über ein an der Stirnseite der Welle angebrachtes Halteelement verbunden ist. Ein ringförmiges, das Innenelement umgreifende Außenelement ist rotierbar am Innenelement montiert. Erste Anschlüsse sind dabei unmittelbar an der zylindrischen Außenseite des Außenelements angebracht. Weitere zweite Anschlüsse sind an der Stirnseite des Innenelements angebracht. Über flexible Leitungen sind die ersten Anschlüsse mit Anschlüssen am Ausleger des Baggers verbunden. Zudem sind die zweiten Anschlüsse über flexible Leitungen mit den Anschlüssen des Schnellwechslers verbunden. Nachteilig an dieser Konstruktion ist jedoch, dass zwar herkömmliche Drehantriebe verwendet werden, die Leitungen nicht verdrehen und somit über Gebühr belastet werden können, jedoch liegen die Leitungen seitlich offen und sind somit äußeren Auswirkungen ungeschützt ausgesetzt.

Der Erfindung liegt die Aufgabe zugrunde, eine Vorrichtung der im Oberbegriff des Anspruchs 1 angegebenen Art derart weiterzubilden, dass unter Vermeidung der genannten Nachteile eine kleinbauende, flexibel einsetzbare Anbauvorrichtung für einen Drehmotor geschaffen wird, bei der auf einfache Weise die Leitungen geschützt sind, insbesondere im kritischen seitlichen Bereich.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch eine von dem Drehmotor separierte Anbauvorrichtung mit einer, jedoch an die Außenkontur des Drehmotors angepasste Hydrauliköldurchführung, welche einfach an den Drehmotor zu montieren ist, mit einem Gehäuse, das den Drehmotor seitlich umgreift, der Einsatzbereich des Drehmotors erheblich erweitert wird. Bedarfsweise kann nunmehr ein herkömmlicher Drehmotor mit dieser Anbauvorrichtung versehen und somit der Drehmotor an die Kundenwünsche individuell angepasst werden.

Nach der Erfindung ist daher die Vorrichtung zum Leiten von Hydraulikflüssigkeit von einem ersten Anschluss zu einem zweiten Anschluss über zumindest eine Leitung mit einem Gehäuse versehen, welches ein erstes Gehäuseteil mit dem ersten Anschluss und ein zweites Gehäuseteil mit dem zweiten Anschluss umfasst. Das erste Gehäuseteil und das zweite Gehäuseteil der Vorrichtung sind relativ zueinander um eine Drehachse drehbar und weisen eine hydraulische Drehdurchführung zum Übertragen des Hydrauliköls auf. Der erste Gehäuseteil weist ein Zentralgehäuse und der zweite Gehäuseteil einen Zentralkörper auf. Das Zentralgehäuse und der Zentralkörper greifen ineinander ein und sind drehbar zueinander gelagert. Das erste Gehäuseteil kann dabei Befestigungsmittel aufweisen, welche dem ersten Teil des Drehmotors zugeordnet sind. Erfindungsgemäß eine ist die Vorrichtung zum lösbaren Anbringen an einen hydraulischen Drehmotor mit von der Vorrichtung separaten hydraulischen Anschlüssen zum hydraulischen Betrieb des Drehmotors ausgebildet. Dafür sind Befestigungsmittel zum Befestigen der Vorrichtung seitlich an dem Drehmotor vorgesehen. Der Drehmotor umfasst einen ersten Teil und einen gegenüber dem ersten Teil schwenkbaren zweiten Teil.

Dabei erstreckt sich zumindest jeweils ein Leitungsarm von dem Zentralgehäuse und dem Zentralkörper bezogen auf die Drehachse im Wesentlichen radial weg. Weiterhin weist das zweite Gehäuseteil ebenfalls Befestigungsmittel auf, welche dem zweiten Teil des Drehmotors zugeordnet sind. Über die Befestigungsmittel ist die Vorrichtung mit dem Drehmotor lösbar verbindbar, wobei der zweite Anschluss für ein mit dem Drehmotor verbindbares weiteres Hydraulikgerät ausgebildet ist. Für eine Fixierung der Vorrichtung ist zumindest ein Gehäuseteil der Vorrichtung über ein Befestigungsmittel an dem Drehmotor fixiert. Über die Leitungsarme sind die Leitungen vor mechanischer Einwirkung und Leckage geschützt. Durch die Befestigungsmittel können auf einfache Weise Leckage an den Anschlüssen vermieden werden, da auf den Anschlüssen dadurch keine Kräfte wirken. Auf diese Weise ist die Vorrichtung einfach mit einem Drehmotor als Anbauvorrichtung verbindbar und kann somit bedarfsweise mit dem Drehmotor eine Einheit bilden.

Vorzugsweise knickt der erste Leitungsarm und/oder zweite Leitungsarm im Endbereich in eine quer zur radialen Erstreckung des Leitungsarms sich ergebende Richtung ab, insbesondere verläuft der Leitungsarm dann parallel zur Drehachse. Hierdurch wird erreicht, dass die Vorrichtung einen Drehmotor seitlich umgreift und somit die Anschlüsse außerhalb des kritischen seitlichen Bereichs vorgesehen sind.

Der erste Leitungsarm kann integraler, fester Bestandteil des Zentralgehäuses sein. Alternativ oder zudem kann der zweite Leitungsarm integraler, fester Bestandteil des Zentralkörpers sein. Die Leitungen sind hierdurch durchgehend von den Leitungsarmen, dem Zentralgehäuse und dem Zentralkörper vor mechanischer Beschädigung geschützt.

Insbesondere weist der erste Leitungsarm zumindest eine Durchgangsbohrung für die Aufnahme einer Schraube zum Herstellen einer Schraubverbindung des ersten Gehäuseteils mit dem ersten Teil des Drehmotors auf. Die Durchgangsbohrung ist dabei vor allem im Endbereich des ersten Leitungsarms angeordnet, der sich in eine Richtung parallel zur Drehachse erstreckt.

Der zweite Leitungsarm weist dabei ebenfalls mindestens eine Durchgangsbohrung für die Aufnahme jeweils einer Schraube zum Herstellen einer Schraubverbindung mit dem zweiten Teil des Drehmotors auf. Dabei ist die Durchgangsbohrung im radial von dem Zentralkörper sich weg erstreckenden Bereich des zweiten Leitungsarme angeordnet. Hierdurch wird die Befestigung näher den zweiten Anschlüssen ermöglicht, ohne beispielsweise vorhandene Konstruktionselemente des Drehmotors oder des anzuschließenden Schnellwechslers zu verändern.

Mittels jeweils mind. einer Schraube kann somit die Vorrichtung einfach montiert, aber auch bei Bedarf wieder demontiert werden.

Vorzugsweise umfasst der erste Leitungsarm die Leitung oder die Leitungen von der Drehdurchführung im Zentralgehäuse und dem Zentralkörper zum ersten Anschluss oder zu den ersten Anschlüssen. Ebenso kann der zweite Leitungsarm die Leitung oder die Leitungen von der Drehdurchführung im Zentralgehäuse und dem Zentralkörper zum zweiten Anschluss oder zu den zweiten Anschlüssen umfassen.

Gemäß einer Ausführungsform sind zwei zweite Leitungsarme mit jeweils einer Leitung vorgesehen, welche ausgehend von der Drehdurchführung zueinander in einem Winkel verlaufen. Hierdurch können in einem Abstand zueinander sowie in einem Winkel zueinander angeordnete zweite Anschlüsse ohne weiteres realisiert werden, beispielsweise wenn die örtlichen Gegebenheiten es erfordern.

Das Zentralgehäuse und/oder der Zentralkörper kann bzw. können im Wesentlichen eine zylindrische Grundform aufweisen. Mögliches Material im Erdreich wie Äste oder Stahlstreben gleiten dadurch einfach am Gehäuse ab, ohne sich zu verhaken und die Vorrichtung zu beschädigen.

Gemäß einer Ausführungsform der Erfindung sind das Zentralgehäuse des ersten Gehäuseteils im Hinblick auf die Drehachse und die Montagerichtung außen und der Zentralkörper des zweiten Gehäuseteils innen angeordnet. Hierbei kann das zweite Gehäuseteil im ersten Gehäuseteil gelagert sein und eine einfache Montage wird gewährleistet.

Um unter anderem eine einfache Fertigung zu ermöglichen, weist der Zentralkörper eine Rückwand auf, die in den zweiten Leitungsarm übergeht. Mit dem übrigen Bereich des Zentralkörpers greift dieses in das Zentralgehäuse ein. Somit ist der Zentralkörper im Zentralgehäuse drehbar gelagert.

Vorzugsweise sind zumindest zwei Leitungen vorgesehen. Für jede Leitung sind ein erster Anschluss und ein zweiter Anschluss vorgesehen. Über die zwei Leitungen können an den Drehmotor angeschlossene weitere Hydraulikwerkzeuge/Hydraulikgeräte gesteuert werden.

Um insbesondere den beengten Platzverhältnissen beim Drehmotor im Bereich des Anschlusses zu einem Baggerarm Rechnung zu tragen, sind die ersten Anschlüsse zueinander im Winkel, insbesondere V-förmig, angeordnet. Die Hydraulikleitungen, welche vom Baggerarm zum Drehmotor geführt werden, können dadurch einfach an die ersten Anschlüsse angeschlossen werden.

Gemäß einer Ausführungsform der Erfindung sind die zweiten Anschlüsse parallel zueinander ausgerichtet. Dies ist insoweit von Vorteil, da die meisten Hydraulikwerkzeuge/Hydraulikgeräte oder Hydraulikanbauten parallel zueinander angeordnete Anschlüsse aufweisen.

Als günstig hat sich eine maximale Erstreckung in Richtung der Drehachse erwiesen, welche kleiner ist als die maximale Erstreckung quer zur Drehachse, insbesondere kleiner als 50%, vorzugsweise 30%, vorzugsweise 20%, der maximalen Erstreckung quer zur Drehachse. Hierdurch baut die Vorrichtung relativ flach und schränkt beispielsweise den Einsatz eines Baggerarms mit daran angeschlossenem Drehmotor und Werkzeug nicht ein. Die Tiefe der Vorrichtung ist somit deutlich kleiner als die Höhe.

Gemäß einem weiteren Aspekt betrifft die Erfindung einen Drehmotor mit einem Gehäuse, mit zumindest einem in dem Gehäuse axial verschieblich aufgenommenen Kolben, der durch Beaufschlagung mit einem Druckmedium in einer Druckkammer der beidseitig angeordneten Druckkammern axial antreibbar ist, sowie mit zumindest einer in dem Gehäuse axial fest um eine Drehachse drehbar gelagerten Motorwelle, wobei der Kolben mit einer Wellendurchgangsausnehmung versehen ist und die Wellendurchgangsausnehmung und die Motorwelle in einem Schraubeneingriff miteinander stehen und verdrehfest gegenüber dem Gehäuse geführt sind, sodass über das Druckmedium der Kolben axial bewegt wird. Über die verdrehfeste Führung des Kolbens im Gehäuse und den Schraubeneingriff mit der Motorwelle wird die axiale Bewegung des Kolbens in eine Schwenkbewegung der Motorwelle umgesetzt. Dieser Drehmotor ist erfindungsgemäß mit einer Vorrichtung versehen, wie sie oben beschrieben wurde. Dabei wird der erste Teil des Drehmotors durch das Gehäuse gebildet. Der zweite Teil des Drehmotors wird durch die mit der Motorwelle verbundenen Flansche gebildet.

Vorzugsweise weist der Drehmotor dem Gehäuse der Vorrichtung zugeordnete Drehmomentstützen auf, um eine Verbindung und somit ein einfaches Verbinden von Vorrichtung mit Drehmotor zu ermöglichen.

Für eine kompakte Bauweise hat es sich als günstig erwiesen, wenn der Drehmotor Ausnehmungen für den ersten und/oder zweiten Leitungsarm aufweist.

Das Integrieren des Drehmotors zwischen einem Baggerarm und einem Werkzeug wird dadurch erleichtert, wenn auf der einen Seite die Flansche mit einem Schnellwechsler und der Schnellwechsler über die zweiten Anschlüsse mit der Vorrichtung hydraulisch verbunden sind. Auf der anderen Seite kann das Gehäuse des Drehmotors mit einem Anschlussrahmen versehen sein, der mit dem Baggerarm verbunden ist.

Vorzugsweise ist auf jeder Stirnseite des Drehmotors eine Vorrichtung angeordnet, sodass zwei verschiedene hydraulische Geräte dem Drehmotor konstruktiv in Reihe nachgeordnet werden können. Die Hydraulikleitungen der beiden Vorrichtungen werden dabei unabhängig voneinander mit Druck beaufschlagt und geregelt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht auf einen Bagger mit einem am Baggerarm angeschlossenen Drehmotor, der eine erfindungsgemäße Vorrichtung gemäß einer ersten Ausführungsform der Erfindung aufweist, und auf einen an dem Drehmotor angebrachten Schnellwechsler mit Schaufel;
- Fig. 2: eine perspektivische Ansicht von Fig. 1, wobei der Schnellwechsler nicht mit einer Schaufel verbunden ist;
- Fig. 3a: eine perspektivische Ansicht des Drehmotors von Fig. 1 mit montierter Vorrichtung nach der Erfindung;
- Fig. 3b: eine perspektivische Ansicht auf den Drehmotor von Fig. 3a mit in Explosionsdarstellung losgelöster Vorrichtung nach der Erfindung;
- Fig. 4a: eine perspektivische Ansicht auf den Drehmotor von Fig. 3b, jedoch nach links geschwenkt;
- Fig. 4b: eine perspektivische Ansicht auf den Drehmotor von Fig. 3b, jedoch nach rechts geschwenkt;
- Fig. 5a: eine perspektivische Ansicht auf den Drehmotor von Fig. 3a, jedoch nach rechts geschwenkt;
- Fig. 5b: eine perspektivische Ansicht auf den Drehmotor von Fig. 3a, jedoch nach links geschwenkt;
- Fig. 6: eine Seitenansicht auf den Drehmotor von Fig. 3a:
- Fig. 7: eine perspektivische Ansicht von schräg oben auf den Drehmotor von Fig. 3a;
- Fig. 8: eine perspektivische Darstellung von schräg vorne auf die Vorrichtung nach der Erfindung;
- Fig. 9: eine perspektivische Darstellung von hinten auf die Vorrichtung nach der Erfindung;
- Fig. 10a: eine Hinteransicht auf die Vorrichtung nach der Erfindung;
- Fig. 10b: eine Seitenansicht auf die Vorrichtung von Fig. 10a mit einem Teilschnitt,

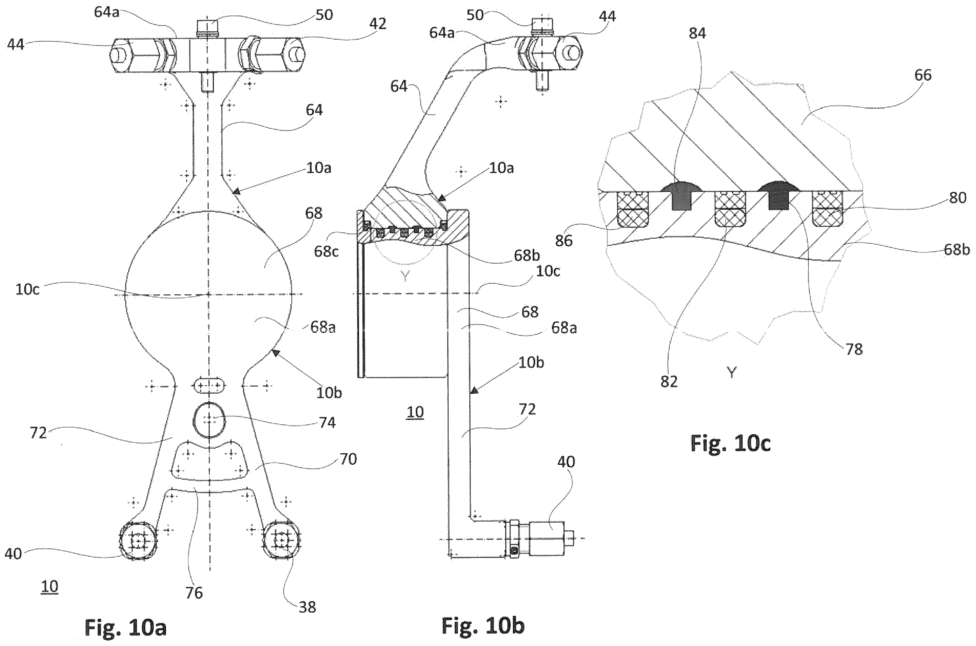

- Fig. 10 c: eine Vergrößerung von Fig. 10b gemäß dem Kreis Y;

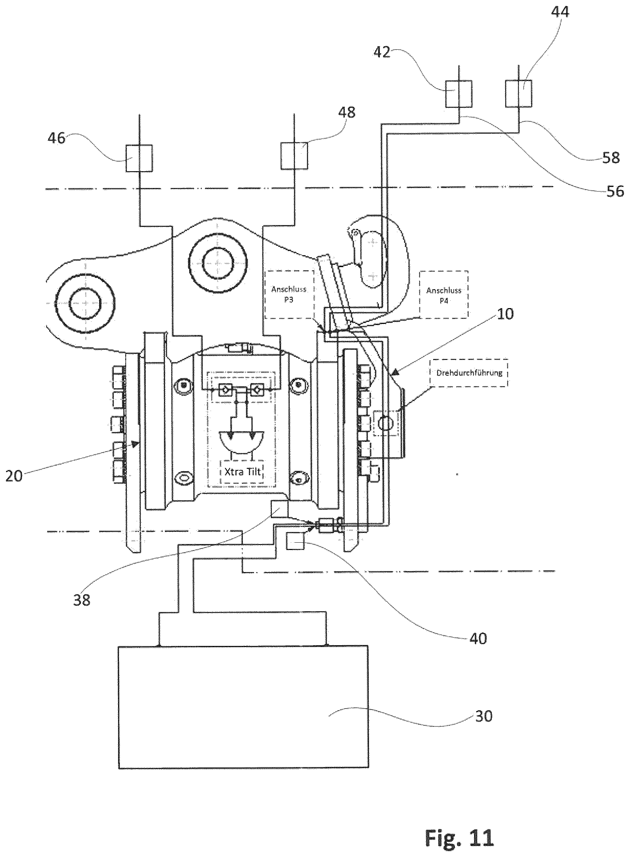

- Fig. 11: ein Hydraulikschaltbild mit schematisch dargestelltem Drehmotor und der Vorrichtung nach der Erfindung;

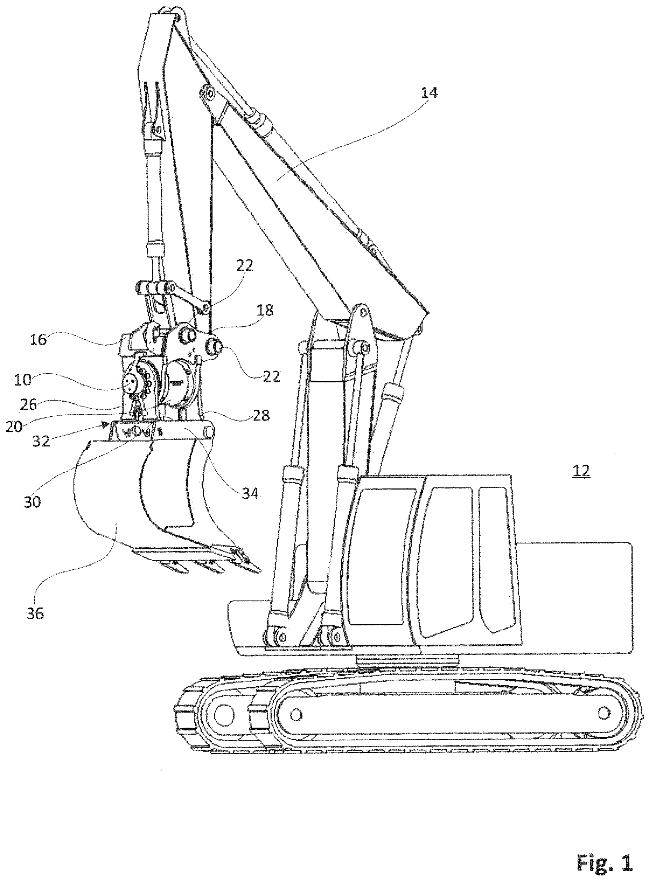

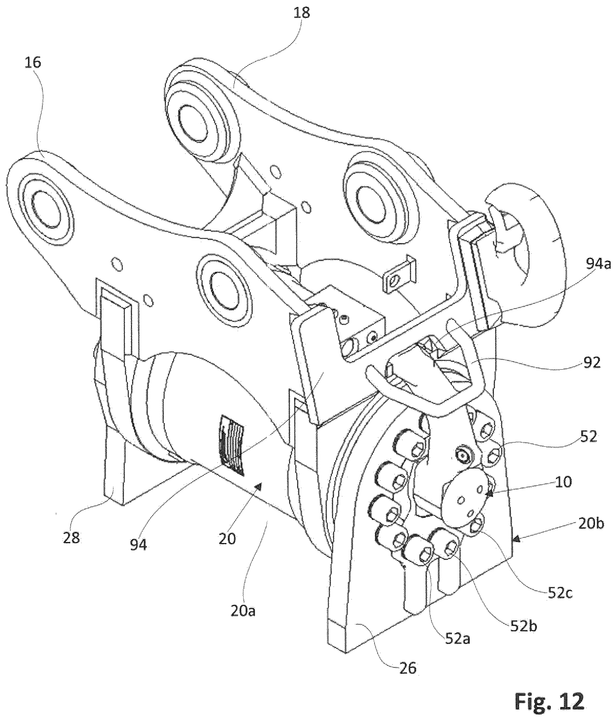

- Fig. 12: eine perspektivische Ansicht des Drehmotors von Fig. 1 mit einer montierten Vorrichtung nach einer zweiten Ausführungsform der Erfindung;

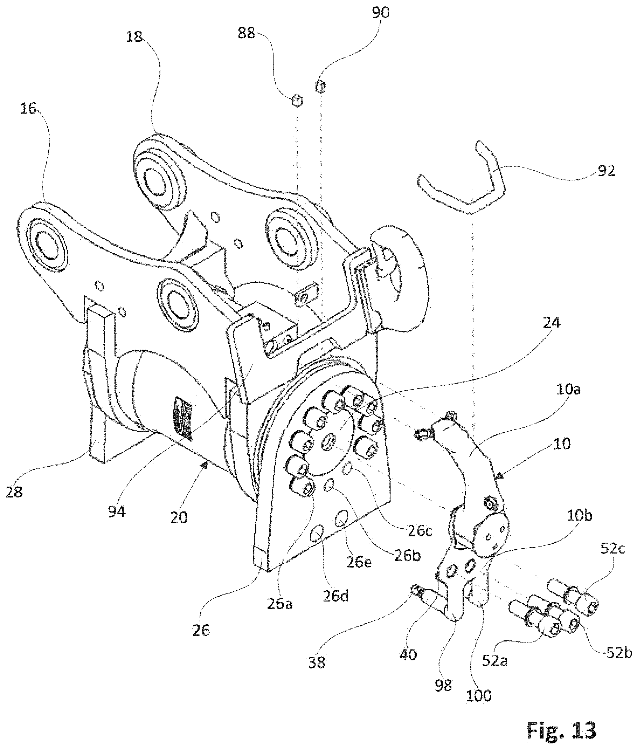

- Fig. 13: eine perspektivische Ansicht auf den Drehmotor von Fig. 12 mit in Explosionsdarstellung losgelöster Vorrichtung nach der zweiten Ausführungsform der Erfindung;

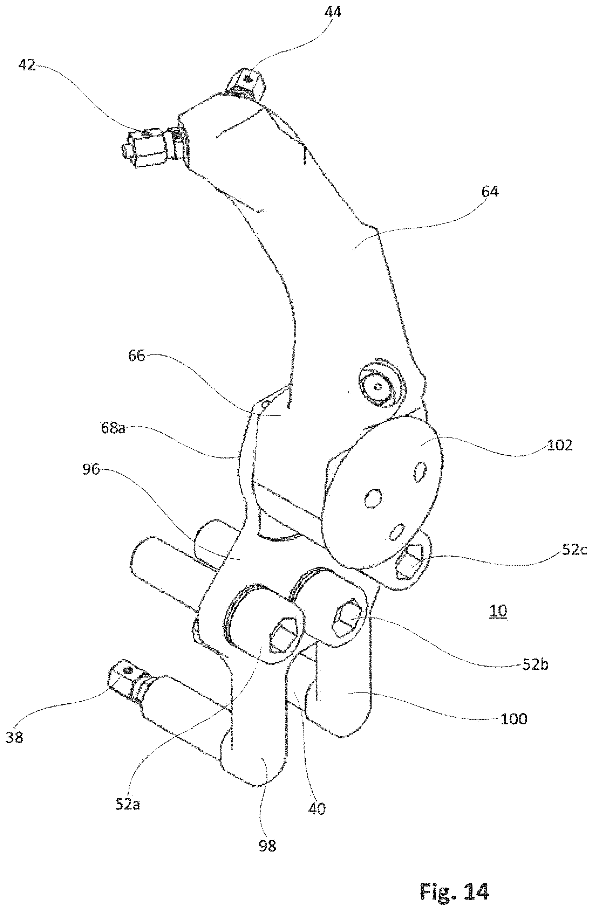

- Fig. 14: eine perspektivische Darstellung von schräg vorne auf die Vorrichtung nach der zweiten Ausführungsform der Erfindung, und

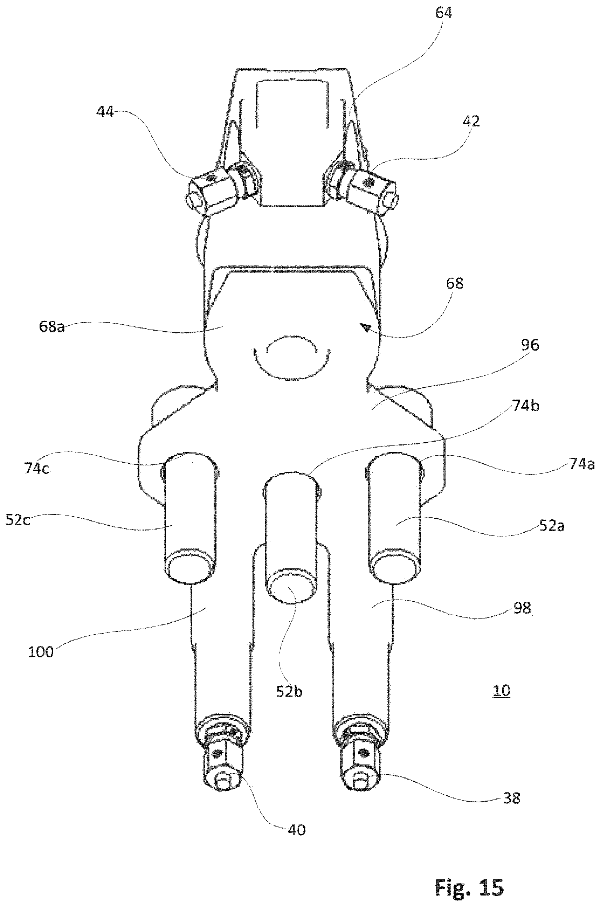

- Fig. 15: eine perspektivische Darstellung von hinten auf die Vorrichtung nach der zweiten Ausführungsform der Erfindung.

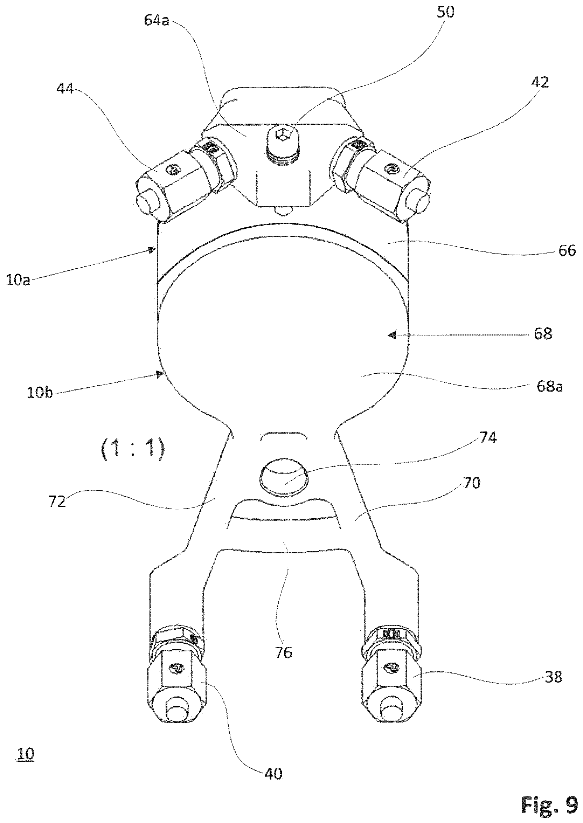

In den Figuren 1 bis 11 ist eine Vorrichtung 10 gemäß einer ersten Ausführungsform der Erfindung dargestellt.

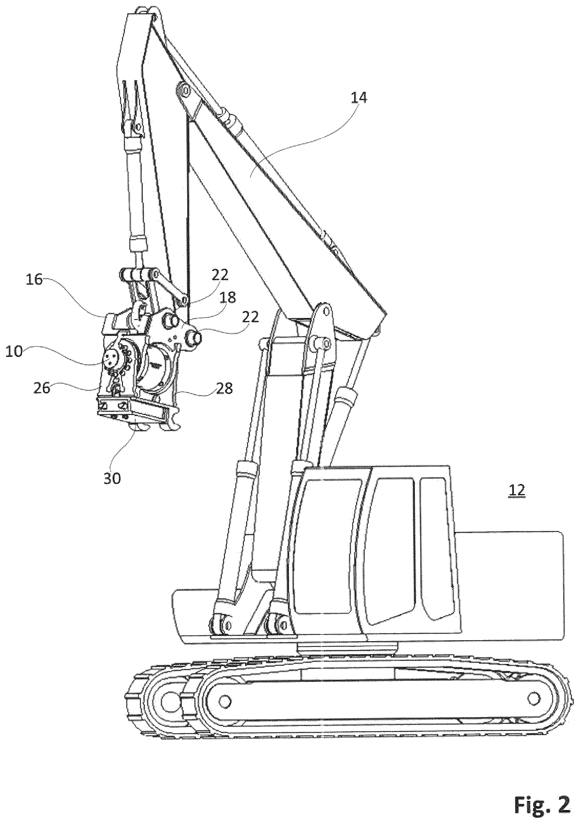

Die Figuren 1 und 2 zeigen einen Bagger 12, welcher einen Baggerarm 14 aufweist. An dem freien Ende des Baggerarms 14 ist in herkömmlicher Weise über zwei Längsflansche 16, 18 ein Drehmotor 20 angeschlossen und über Bolzen 22 gesichert.

Der Drehmotor 20 ist seitlich an seiner Motorwelle 24 mit zwei Verbindungslaschen 26, 28 versehen. Diese Verbindungslaschen 26, 28 sind mit einem Gehäuse eines Hydraulikgeräts in Form eines Schnellwechslers 30 eines Schnellwechselsystems 32 verbunden. Der Schnellwechsler 30 greift in einen Adapterrahmen 34 als Teil des Schnellwechselsystems 32 für Bagger ein. Der Adapterrahmen 34 ist mit einer Schaufel 36 verschweißt.

Der Schnellwechsler 30 wird hydraulisch angetrieben und weist daher zwei hydraulische Anschlüsse auf, welche an zweiten Anschlüssen 38 und 40 der Vorrichtung 10 angeschlossen sind. Über die Vorrichtung 10 ist der Schnellwechsler 30 über erste Anschlüsse 42 und 44 der Vorrichtung 10 hydraulisch mit dem Hydrauliksystem des Baggers 12 verbunden.

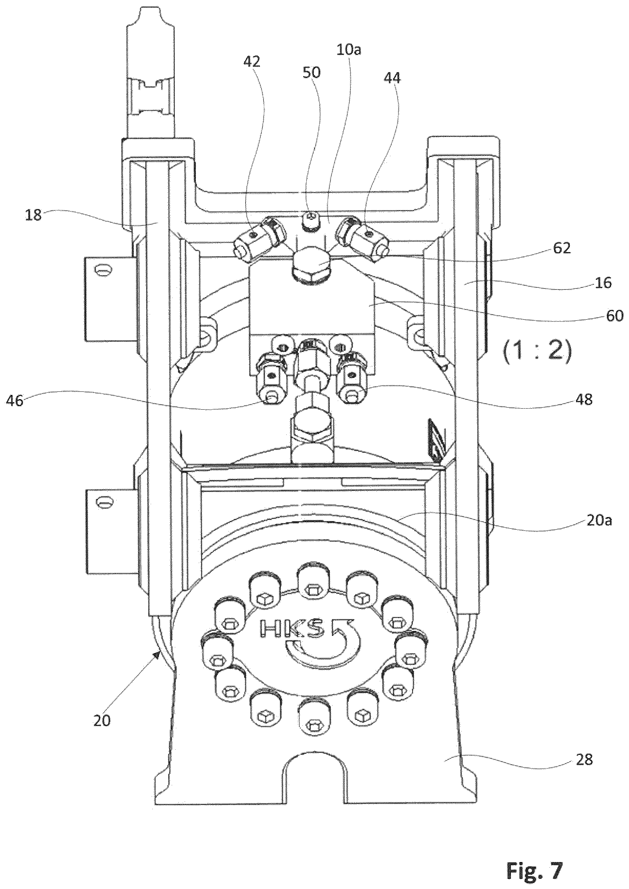

Der Drehmotor 20 wird ebenfalls hydraulisch angetrieben und weist hierfür zwei Drehmotoranschlüsse 46 und 48 auf, siehe Fig. 7.

Der Drehmotor 20 umfasst einen ersten Teil 20a, welcher mit den Verbindungslaschen 16 und 18 fest verbunden ist und im Wesentlichen durch das Gehäuse des Drehmotors 20 gebildet wird, und einen zweiten Teil 20b, welcher im Wesentlichen aus der gegenüber dem ersten Teil 20a beweglichen Motorwelle 24 mit daran angeschraubten Verbindungslaschen 26, 28 besteht. Die Motorwelle 24 ist in dem ersten Teil 20a gelagert, welche im Wesentlichen durch ein Gehäuse des Drehmotors 20 gebildet wird.

Um dem Schnellwechsler 30 Hydraulikflüssigkeit bereitzustellen, ist die Vorrichtung 10 mit dem Drehmotor 20 lösbar verbunden. Dabei besteht die Vorrichtung 10 aus einem ersten Teil 10a, welcher mit dem ersten Teil 20a des Drehmotors 20 verbunden ist, und einem zweiten Teil 10b, welcher mit dem zweiten Teil 20 b des Drehmotors 20 verbunden ist. Der erste Teil 10a der Vorrichtung 10 und der zweite Teil 10b sind relativ zueinander bewegbar, analog der Schwenkbewegung des Drehmotors 20. Der erste Teil 10a ist dabei im Hinblick auf den Drehmotor 20 weiter außen angeordnet und der zweite Teil 10b weiter innen angeordnet. Dabei ist der zweite Teil 10b in dem ersten Teil 10a verschwenkbar gelagert.

Die Vorrichtung 10 weist zwei Leitungen 56 und 58 - siehe Fig. 11 - auf, wobei eine Leitung 56 den ersten Anschluss 42 mit dem zweiten Anschluss 38 verbindet und die andere Leitung 58 den ersten Anschluss 44 mit dem zweiten Anschluss 40. Die Leitungen weisen jeweils eine hydraulische Drehdurchführung auf, auf welche später im Zusammenhang mit den Figuren 10b und 10c noch eingegangen wird.

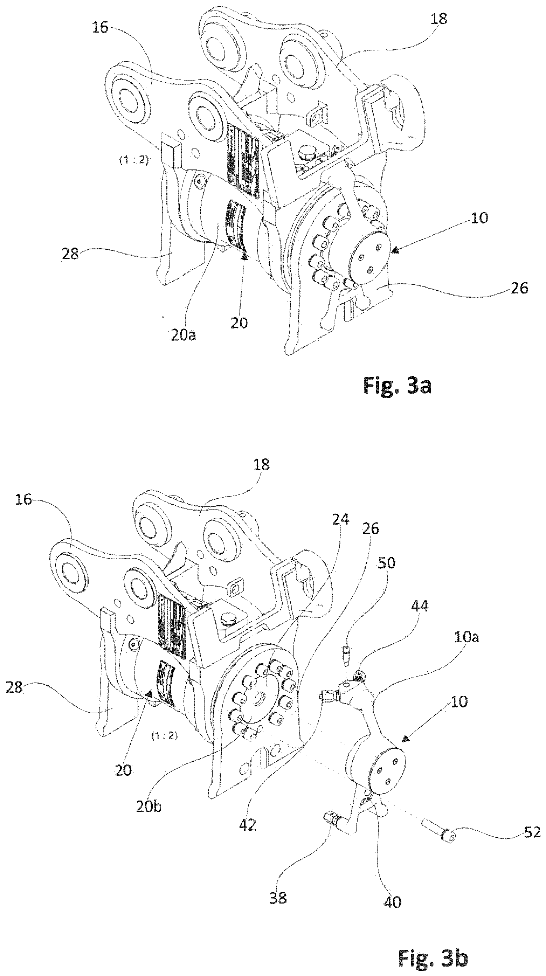

Die Figuren 3a und 3b zeigen den Drehmotor 20 mit den Längsflanschen 16, 18 sowie die an die Motorwelle 24 des Drehmotors 20 angebrachten Verbindungslaschen 26, 28. An den Drehmotor 20 ist die Vorrichtung 10 befestigt, und zwar derart, dass der erste Teil 10a der Vorrichtung 10 über eine Schraube 50 mit dem Gehäuse des Drehmotors 20, also mit dem ersten Teil 20a des Drehmotors 20, an der Oberseite verschraubt ist. Der zweite Teil 10b der Vorrichtung 10 ist mittelbar mit dem zweiten Teil 20b des Drehmotors 20 über mindestens eine Schraube 52 an der Stirnseite verschraubt, nämlich mit der Verbindungslasche 26, welche mit der Motorwelle 24 des Drehmotors 20, und somit mit dem zweiten Teil 20b, verbunden ist. Fig. 3a zeigt dabei den montierten Zustand und Fig. 3b die Vorrichtung 10 in Explosionsdarstellung zu dem Drehmotor 20, somit den demontierten Zustand.

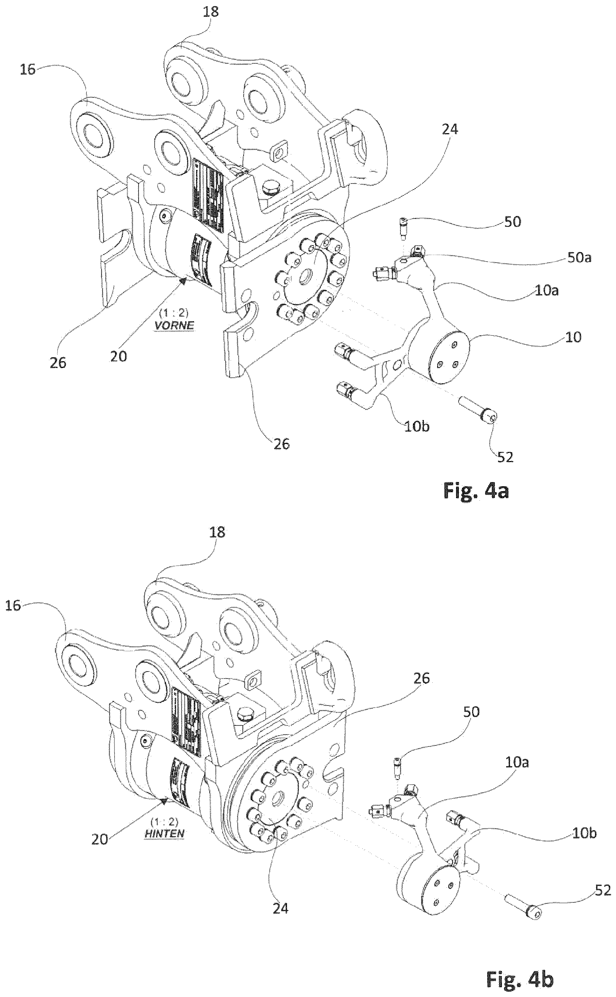

Die Figuren 4a und 4b zeigen die maximalen Schwenkpositionen des Drehmotors 20 und der Vorrichtung 10, wobei die Fig. 4a die maximal nach links und die Fig. 4b die maximal nach rechts geschwenkte Position des Drehmotors 20 und somit auch der Vorrichtung 10 zeigen. Hierbei ist die Vorrichtung 10 in Explosionsdarstellung zu dem Drehmotor 20 und somit in demontiertem Zustand gezeigt.

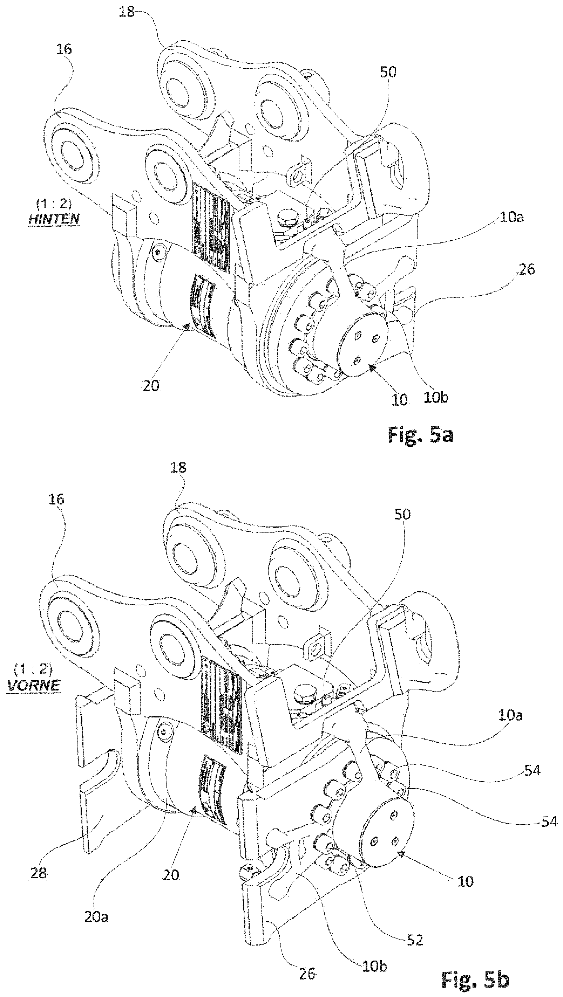

Die Figuren 5a und 5b zeigen die maximale Schwenkposition des Drehmotors 20 mit der montierten Vorrichtung 10, wobei die Fig. 5a die maximal nach rechts und die Fig. 5b die maximal nach links geschwenkte Position des Drehmotors 20 und somit auch der Vorrichtung 10 zeigen.

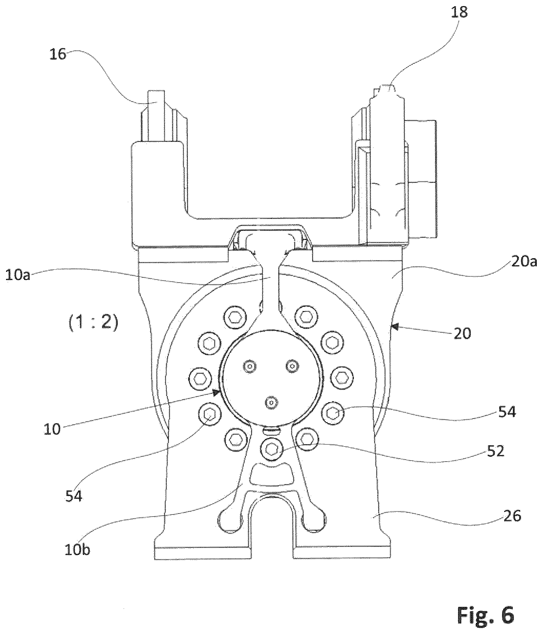

In Fig. 6 ist eine Ansicht auf die Seite des Drehmotors 20 mit montierter Vorrichtung 10 im Einzelnen dargestellt. Hierbei ist erkennbar, dass die Verbindungslasche 26 über Schrauben 54 mit der Motorwelle 24 des Drehmotors 20 verschraubt ist. Die Schrauben 54 sind in gleichmäßigen Abständen zueinander angeordnet und greifen in entsprechende Gewinde der Motorwelle 24 ein. Die Schraube 52 zur Befestigung des zweiten Teils 10b der Vorrichtung 10 greift ebenfalls in ein Gewinde der Motorwelle 24 ein und sichert somit den zweiten Teil 10b der Vorrichtung 10 und die Verbindungslasche 26 an dieser Motorwelle 24.

Die Fig. 7 zeigt von schräg oben den Drehmotor 20 mit den auf dem ersten Teil 20a angebrachten Längsflanschen 16, 18. Hierbei sind die ersten Anschlüsse 42, 44 der Vorrichtung 10 ersichtlich, welche zueinander V-förmig ausgerichtet sind. Die ersten Anschlüsse 42, 44 sind an dem oberen freien Ende des ersten Teils 10a der Vorrichtung 10 angeordnet. Benachbart zu den ersten Anschlüssen 42, 44 greift die Schraube 50 durch den ersten Teil 10a der Vorrichtung 10 in das Gehäuse und somit in den ersten Teil 20a des Drehmotors 20 ein. Weiter nach innen ist eine Anschlussbox 60 fest mit dem Gehäuse des Drehmotors 20 verbunden. Die Anschlussbox 60 weist die hydraulischen Anschlüsse 46, 48 für den Betrieb des Drehmotors 20 auf. Die Anschlussbox 60 ist im Bereich der Anschlüsse 42, 44 der Vorrichtung 10 abgeschrägt ausgebildet, um diese auch bei montierter Vorrichtung 10 demontieren zu können. Die Anschlussbox 60 ist über eine Schraube 62 mit dem Gehäuse des Drehmotors 20 verschraubt.

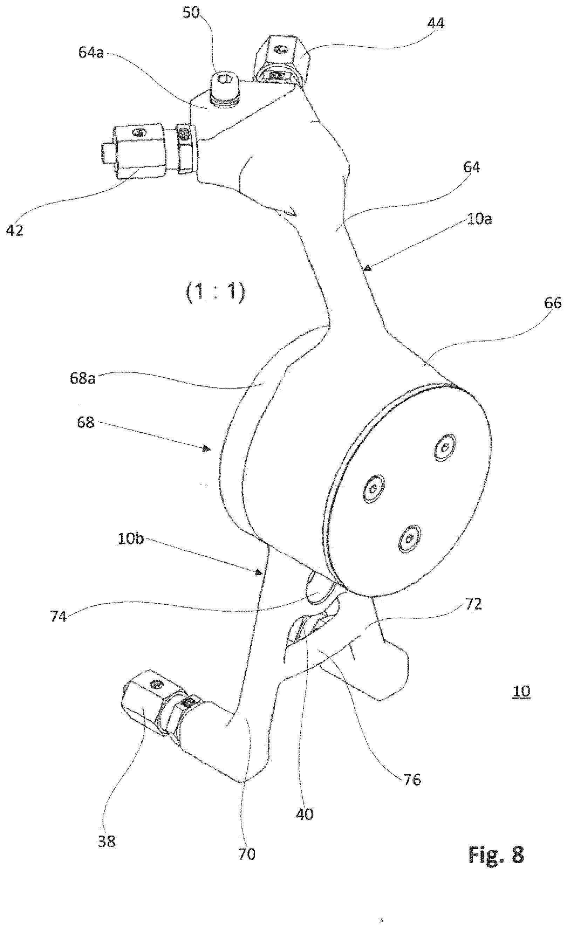

Aus den Figuren 8, 9, 10a und 10b ist die Formgebung der Vorrichtung 10 im Einzelnen zu entnehmen. Der erste Teil 10a der Vorrichtung 10 besteht aus einem Leitungsarm 64, der sich von einem Zentralgehäuse 66 radial und schräg nach oben erstreckt, sich dort verbreitert und die V-förmig zueinander angeordneten ersten Anschlüsse 42, 44 aufweist. Der verbreiterte Bereich 64a am freien Ende des oberen Leitungsarms 64 der Vorrichtung 10 weist eine Bohrung auf, in welche die Schraube 50 zur Befestigung des ersten Teils 10a der Vorrichtung 10 am Gehäuse 20a des Drehmotors 20 eingreift.

In das Zentralgehäuse 66 des ersten Gehäuseteils 10a der Vorrichtung 10 greift ein Zentralkörper 68 des zweiten Gehäuseteils 10b ein und ist dort drehbar gelagert. Der Zentralkörper 68 schließt mit dem Zentralgehäuse 66 bündig ab und erstreckt sich noch ein Stück in Axialrichtung von dem Zentralgehäuse 66 mit seiner Rückwand 68a weg. Von der Rückwand 68a des Zentralkörpers 68 erstrecken sich radial und V-förmig nach unten zwei Leitungsarme 70, 72. Die beiden Leitungsarme 70, 72 umschließen eine Bohrung 74, welche der Schraube 52 zur Befestigung des zweiten Teils 10b der Vorrichtung 10 zugeordnet ist. Aus Stabilitätsgründen sind die beiden Leitungsarme 70, 72 über eine Querstrebe 76 miteinander verbunden. Am freien Ende der Leitungsarme 70, 72 knicken diese in Axialrichtung der Vorrichtung 10 in Richtung des Drehmotors 20 so ab, dass die sich daran anschließenden zweiten Anschlüsse 38, 40 zueinander parallel ausgerichtet sind.

Wie der Fig. 6 zu entnehmen ist, liegt der in der Grundform zylindrische Zentralkörper 68 mit seiner Rückwand 68a innerhalb eines durch die Schrauben 54 und 52 gebildeten Rings. Die Bohrung 74 ist so bemessen, dass die Schraube 52 das standardmäßig vorhandene Gewinde an der Motorwelle 24 im Drehmotor 20 nutzen kann und darüber nicht nur die zugeordnete Verbindungslasche 26 sondern auch den zweiten Gehäuseteil 10b der Vorrichtung 10 sichert.

In den Figuren 10b und 10c ist in einer Seitendarstellung mit Teilschnitt sowie in einer vergrößerten Darstellung des Bereichs Y aus Fig. 10b die hydraulische Drehdurchführung der Vorrichtung 10 im Einzelnen dargestellt. Die erste Leitung 56, welche den ersten Anschluss 42 und zweiten Anschluss 38 miteinander verbindet, verläuft über einen Ölkanal 78 neben dem zwei Rotationsdichtungen 80 und 82 angeordnet sind. Der Ölkanal 78 wird durch entsprechende Ausnehmungen im inneren Bereich 68b des Zentralkörpers 68 des zweiten Teils 10b sowie über Ausnehmungen im Zentralgehäuse 66 des ersten Teils 10a gebildet. Benachbart zu der Rotationsdichtung 82 ist ein weiterer Ölkanal 84 vorgesehen, welcher der zweiten Leitung 58 zugeordnet ist, die den ersten Anschluss 44 und den zweiten Anschluss 40 verbindet. In axialer Richtung schließt sich an den Ölkanal 84 eine weitere Rotationsdichtung 86 an. Die Ölkanäle 78 und 84 sowie die hierzu benachbart angeordneten Rotationsdichtungen 80, 82, 86 bilden eine Hydrauliköl-Drehdurchführung der beiden Leitungen 56, 58. An den inneren Bereich 68b des Zentralkörpers 68 schließt sich ein Deckelbereich 68c an, der einen größeren Durchmesser als der innere Bereich 68b aufweist und im Zusammenwirken mit der Rotationsdichtung 86 und dem Zentralgehäuse 66 die Öldurchführung dichtend abschließt.

In Fig. 11 ist schematisch ein Hydraulikschaltplan dargestellt. Die Anschlüsse 46 und 48 bilden die herkömmlichen Anschlüsse P1 und P2 für den hydraulisch betriebenen Drehmotor 20, welcher um einen bestimmten Winkel schwenkbar ist. Die Vorrichtung 10 ermöglicht als nachrüstbares Element für den Drehmotor 20 die Zurverfügungstellung der weiteren Anschlüsse P3 und P4, welche durch die ersten Anschlüsse 42, 44 und die zweiten Anschlüsse 38, 40 und der ersten Leitung 56 und der zweiten Leitung 58 realisiert wird. Üblicherweise werden die weiteren Anschlüsse für den Betrieb des Schnellwechslers 30 verwendet.

Nach der Erfindung wird es somit möglich, auf Hydraulikleitungen zu verzichten, welche lose um den Drehmotor herumgeführt werden. Vielmehr wird durch die erfindungsgemäße Vorrichtung 10 eine Möglichkeit zur Verfügung gestellt, bestehende Drehmotoren 20 mit der Vorrichtung 10 nachzurüsten. Hierbei werden durch die Vorrichtung 10 geschützte Leitungen 56, 58 von den Hydraulikanschlüssen am Ende des Baggerarms 14 an dem Drehmotor 20 vorbei zu einem unterhalb am Drehmotor 20 angeordneten weiteren hydraulischen Verbraucher in Form eines Schnellwechslers 30 geführt.

Die Hydraulikleitungen 56, 58 sind durch die Vorrichtung 10 gegen äußere Einwirkungen geschützt. Die Teile der Vorrichtung können dabei aus den Werkstoffen wie S355J2, C45 und MS1 (1.2709) bestehen.

Das Hydrauliköl für den Schnellwechsler wird durch eine nachrüstbare hydraulische Drehdurchführung in Form der Vorrichtung 10 geleitet. Das Hydrauliköl kommt von der Trägermaschine in Form des Baggers 12. Es werden keine Hydraulikschläuche verwendet, welche durch die fortlaufenden Schwingbewegungen des Drehmotors, mit der Zeit aber auch durch äußere Einflüsse, beschädigt werden können.

Die Schrauben 50 und 52 für die Befestigung der Vorrichtung 10 bilden zudem eine Verdrehsicherung, welche in z-Richtung ein leichtes Spiel aufweist. Die Schraube 50 kann dabei eine Distanzhülse zum Höhenausgleich aufweisen.

Der hydraulische Drehmotor 20, der auch Schwenkmotor genannt wird, ist in herkömmlicher Weise mit einem in seinem zylindrischen Teil des Gehäuses 20a axial verschieblich aufgenommenen Kolben versehen. Der Kolben wird durch Beaufschlagung mit einem Druckmedium, also Hydrauliköl, über die Drehmotoranschlüsse 46, 48, in einer Druckkammer mit Hydrauliköl beaufschlagt. Je nachdem welche Seite des Kolbens beaufschlagt wird, bewegt sich die Motorwelle 24 in die eine oder andere Richtung. Die Motorwelle ist in dem Gehäuse 20a axial fest um eine Drehachse drehbar gelagert. Der Kolben ist mit einer Wellendurchgangsausnehmung versehen. Die Wellendurchgangsausnehmung und die Motorwelle 24 stehen in einem Schraubeneingriff miteinander. Der Kolben ist verdrehfest gegenüber dem Gehäuse 20a geführt, sodass über das Druckmedium der Kolben axial bewegt wird. Über die verdrehfeste Führung des Kolbens im Gehäuse 20a und den Schraubeneingriff mit der Motorwelle 24 wird die axiale Bewegung des Kolbens in eine Schwenkbewegung der Motorwelle 24 umgesetzt.

Die Vorrichtung weist eine maximale Erstreckung in Richtung der Drehachse auf, welche kleiner ist als die maximale Erstreckung quer zur Drehachse, insbesondere kleiner als 50%, vorzugsweise 30%, vorzugsweise 20%, der maximalen Erstreckung quer zur Drehachse. Hierdurch baut die Vorrichtung relativ klein.

Nach der Erfindung können somit auf einfache Weise bestehende Drehmotoren 20 bei Bedarf mit der Vorrichtung 10 nachgerüstet werden. Die Gefährdung der bisher verwendeten Hydraulikschläuche entfällt. Bei Bedarf können die Vorrichtungen 10 auch wieder entfernt werden, sodass am Baggerarm 14 nur die notwendig bewegten Massen vorhanden sind.

Durch die ineinandergreifenden Teile 10a und 10b baut die Vorrichtung 10 sehr flach und der Betrieb zusammen mit dem Drehmotor 20 wird nicht eingeschränkt. Des Weiteren ist die Kombination aus einem Drehmotor 20 mit der Vorrichtung 10 neu gegenüber den in den Drehmotor 20 integrierten Leitungen nach dem Stand der Technik. Der Bauraum bleibt kompakt und alle Vorteile der integrierten Durchführungen werden erreicht.

In den Figuren 12 bis 15 ist die Vorrichtung 10 gemäß einer zweiten Ausführungsform der Erfindung dargestellt, wobei für gleiche Teile die gleichen Bezugszeichen verwendet werden.

Die Vorrichtung 10 weist zwei Leitungen 56 und 58 - siehe Fig. 11 - auf, wobei eine Leitung 56 den ersten Anschluss 42 mit dem zweiten Anschluss 38 verbindet und die andere Leitung 58 den ersten Anschluss 44 mit dem zweiten Anschluss 40. Die Leitungen weisen jeweils eine hydraulische Drehdurchführung auf, auf welche später im Zusammenhang mit den Figuren 10b und 10c noch eingegangen wird.

Die Figuren 12 und 13 zeigen den Drehmotor 20 mit den Längsflanschen 16, 18 sowie die an die Motorwelle 24 des Drehmotors 20 angebrachten Verbindungslaschen 26, 28. An den Drehmotor 20 ist die Vorrichtung 10 befestigt, und zwar derart, dass der zweite Teil 10b der Vorrichtung 10 über drei Schrauben 52a, 52b, 52c mittelbar mit dem zweiten Teil 20b des Drehmotors 20 an der Stirnseite verschraubt ist, nämlich mit der Verbindungslasche 26, welche mit der Motorwelle 24 des Drehmotors 20, und somit mit dem zweiten Teil 20b, verbunden ist.

Fig. 12 zeigt dabei den montierten Zustand und Fig. 13 die Vorrichtung 10 in Explosionsdarstellung zu dem Drehmotor 20, somit den demontierten Zustand.

Unterschiedlich zur ersten Ausführungsform ist nun, dass der erste Teil 10a der Vorrichtung 10 seitlich von zwei Stiften (Blöcke, Schrauben) 88 und 90 gegen ein Verdrehen gesichert ist. Hierfür liegen die Stifte 88 und 90 seitlich an den ersten Anschlüssen 42 und 44 an dem ersten Teil 10a an und sind mit dem Gehäuse 20a, also dem ersten Teil des Drehmotors 20, fest verbunden. Die Vorrichtung 10 kann aber durch Lösen der Schrauben 52a, 52b und 52c sowie der Leitungen von den ersten Anschlüssen 42, 44 und den zweiten Anschlüssen 38, 40 durch leichtes Anheben um die Höhe der Stifte (Blöcke, Schrauben) 88 und 90 vom Drehmotor 20 entfernt werden, beispielsweise um die Vorrichtung 10 zu warten oder auszutauschen.

Den Schrauben 52a, 52b und 52c sind entsprechende Bohrungen 26a, 26b und 26c in der Verbindungslasche 26 zugeordnet, damit die Schrauben 52a, 52b und 52c in zugeordnete Gewindebohrungen - hier nicht dargestellt - der Motorwelle 24 eingreifen können.

Weiterhin weist die Verbindungslasche Durchgangsbohrungen 26d, 26e auf, durch welche sich die horizontal verlaufenden Anschlüsse 38 und 40 erstrecken.

Zudem ist ein Schutzbügel 92 an einer die Längslaschen 16 und 18 verbindenden Stirnplatte 94 angeschweißt, der als zusätzlicher Schutz der Vorrichtung 10 während des Betriebs dient.

Hinter der Stirnplatte 94 sind die Anschlüsse 42 und 44 angeordnet. Hierfür ist eine Ausnehmung 94a in der Stirnplatte vorgesehen.

Sämtliche Anschlüsse sind somit axial innerhalb des Drehmotors 20 und durch die Stirnplatte 94, den Schutzbügel 92 und durch die Verbindungslasche 26 vor mechanischer Beeinträchtigung geschützt.

Aus den Figuren 14 und 15 ist die Formgebung der Vorrichtung 10 nach der zweiten Ausführungsform im Einzelnen zu entnehmen. Der erste Teil 10a der Vorrichtung 10 besteht aus einem Leitungsarm 64, der sich von einem Zentralgehäuse 66 radial und schräg nach oben erstreckt, sich dort etwas horizontal verläuft. Die V-förmig zueinander angeordneten ersten Anschlüsse 42, 44 erstrecken sich aus dem freien Ende des Leitungsarms 64.

In das Zentralgehäuse 66 des ersten Gehäuseteils 10a der Vorrichtung 10 greift ein Zentralkörper 68 des zweiten Gehäuseteils 10b ein und ist dort drehbar gelagert. Der Zentralkörper 68 schließt mit dem Zentralgehäuse 66 bündig ab und erstreckt sich noch ein Stück in Axialrichtung von dem Zentralgehäuse 66 mit seiner Rückwand 68a weg. Von der Rückwand 68a des Zentralkörpers 68 erstreckt sich V-förmig und schließlich vertikal nach unten ein Leitungsarm 96. Der Leitungsarm 96 umfasst die Bohrungen 74a, 74b und 74c, welche den Schrauben 52a, 52b und 52c zur Befestigung des zweiten Teils 10b der Vorrichtung 10 zugeordnet sind. Der Leitungsarm 94 teilt sich nach den Bohrungen 74a, 74b und 74c in zwei Leitungsarme 98 und 100, die miteinander verbunden sind. Am freien Ende der Leitungsarme 98, 100 knicken diese in Axialrichtung der Vorrichtung 10 in Richtung des Drehmotors 20 so ab, dass die sich daran anschließenden zweiten Anschlüsse 38, 40 zueinander parallel ausgerichtet sind.

Wie bei der ersten Ausführungsform, siehe Fig. 6, liegt der in der Grundform zylindrische Zentralkörper 68 mit seiner Rückwand 68a innerhalb eines durch die Schrauben 54 und 52a, 52b und 52c gebildeten Rings. Die Bohrung 74a, 74b und 7c ist so bemessen, dass die Schrauben 52a, 52b und 52c das standardmäßig vorhandene Gewinde an der Motorwelle 24 im Drehmotor 20 nutzen können und darüber nicht nur mit der zugeordneten Verbindungslasche 26, sondern auch mit dem zweiten Gehäuseteil 10b der Vorrichtung 10 verbunden sind.

Der Zentralkörper 68 ist auf der der Rückwand 68a entfernt gelegenen Seite mit einem Deckelbereich 102 verbunden.

### Bezugszeichenliste

- 10: Vorrichtung
- 10a: erster Gehäuseteil der Vorrichtung 10 - oben
- 10b: zweiter Gehäuseteil der Vorrichtung 10 - unten
- 10c: Drehachse
- 12: Bagger
- 14: Baggerarm
- 16: Längsflansch - links
- 18: Längsflansch -rechts
- 20: Drehmotor
- 20a: erster Teil des Drehmotors 20, Gehäuse
- 20b: zweiter Teil des Drehmotors 20, Motorwelle 24
- 22: Bolzen zum Verbinden des Drehmotors 20 mit dem Baggerarm 14
- 24: Motorwelle des Drehmotors 20
- 26: Verbindungslasche - links
- 26a: Bohrung für Schraube 52a in Verbindungslasche 26
- 26b: Bohrung für Schraube 52b in Verbindungslasche 26
- 26c: Bohrung für Schraube 52c in Verbindungslasche 26
- 26d: Durchgangsbohrung links in Verbindungslasche 26 für Leitungsarm 98
- 26e: Durchgangsbohrung rechts in Verbindungslasche 26 für Leitungsarm 100
- 28: Verbindungslasche - rechts
- 30: Schnellwechsler
- 32: Schnellwechslersystem
- 34: Adapterrahmen des Schnellwechslersystems 32
- 36: Schaufel
- 38: zweiter Anschluss der Vorrichtung 10 - links
- 40: zweiter Anschluss der Vorrichtung 10 - rechts
- 42: erster Anschluss der Vorrichtung 10 - links
- 44: erster Anschluss der Vorrichtung 10 - rechts
- 46: Drehmotoranschluss - links
- 48: Drehmotoranschluss - rechts
- 50: Schraube zur Befestigung des ersten Teils 10a der Vorrichtung
- 50a: Durchgangsbohrung des ersten Leitungsarms 64
- 52: Schraube zur Befestigung des zweiten Teils 10b der Vorrichtung
- 52a: erste Schraube - links
- 52b: zweite Schraube - mitte
- 52c: dritte Schraube - rechts
- 54: Schrauben zur Befestigung der Verbindungslaschen 26, 28 an der Motorwelle 24
- 56: erste Leitung - Verbindung von erstem Anschluss 42 und zweitem Anschluss 38
- 58: zweite Leitung - Verbindung von erstem Anschluss 44 und zweitem Anschluss 40
- 60: Anschlussbox
- 62: Schraube zur Befestigung der Anschlussbox 60
- 64: Leitungsarm der Vorrichtung 10, nach oben verlaufend
- 64a: Verbreiterter Bereich des oberen Leitungsarms 64
- 66: Zentralgehäuse
- 68: Zentralkörper
- 68a: Rückwandung des Zentralkörpers 68
- 68b: innerer Bereich des Zentralkörpers 68
- 68c: Deckelbereich des Zentralkörpers 68
- 70: Leitungsarm - nach unten verlaufend, links
- 72: Leitungsarm - nach unten verlaufend, rechts
- 74: Bohrung für die Schraube 52 zur Befestigung der Vorrichtung 10
- 74a: Bohrung links für die Schraube 52a zur Befestigung der Vorrichtung 10
- 74b: Bohrung mitte für die Schraube 52b zur Befestigung der Vorrichtung 10
- 74c: Bohrung rechts für die Schraube 52c zur Befestigung der Vorrichtung 10
- 76: Querstrebe
- 78: Ölkanal
- 80: Rotationsdichtung
- 82: Rotationsdichtung
- 84: Ölkanal
- 86: Rotationsdichtung
- 88: Stift-, Block-, Schraube- links, Verdrehsicherung
- 90: Stift-, Block-, Schraube- rechts, Verdrehsicherung
- 92: Schutzbügel
- 94: Stirnplatte
- 96: Leitungsarm
- 98: Leitungsarm
- 100: Leitungsarm
- 102: Deckelbereich des Zentralkörpers 68

## Patentansprüche

1. Vorrichtung (10) zum Leiten von Hydraulikflüssigkeit von einem ersten Anschluss (42, 44) zu einem zweiten Anschluss (38, 40) über zumindest eine Leitung (56, 58), mit einem Gehäuse, welches ein erstes Gehäuseteil (10a) mit dem ersten Anschluss (42, 44) und einem zweiten Gehäuseteil (10b) mit dem zweiten Anschluss (38, 40) umfasst, welche relativ zueinander um eine Drehachse (10c) drehbar sind und eine hydraulische Drehdurchführung zum Übertragen des Hydrauliköls aufweisen, wobei der erste Gehäuseteil (10a) ein Zentralgehäuse (66) aufweist, der zweite Gehäuseteil (10b) einen Zentralkörper (68) aufweist, das Zentralgehäuse (66) und der Zentralkörper (68) ineinandergreifen und drehbar zueinander gelagert sind, **gekennzeichnet durch** eine Ausbildung zum lösbaren Anbringen an einen hydraulischen Drehmotor (20) mit von der Vorrichtung (10) separaten hydraulischen Anschlüssen (46, 48) zum hydraulischen Betrieb des Drehmotors (20), wobei Befestigungsmittel (50, 52) zum Befestigen der Vorrichtung (10) seitlich an dem Drehmotor (20) vorgesehen sind, der einen ersten Teil (20a) und einen gegenüber dem ersten Teil (20a) schwenkbaren zweiten Teil (20b) umfasst, wobei sich zumindest jeweils ein Leitungsarm (64; 70, 72) von dem Zentralgehäuse (66) und dem Zentralkörper (68) bezogen auf die Drehachse (10c) im Wesentlichen radial weg erstreckt und dass das zweite Gehäuseteil (10b) Befestigungsmittel (52) umfasst, welche dem zweiten Teil (20b) des Drehmotors (20) zugeordnet sind und über die Befestigungsmittel (52) die Vorrichtung (10) mit dem Drehmotor (20) lösbar verbindbar ist, wobei der zweite Anschluss (38, 40) für ein mit dem Drehmotor (20) verbindbares weiteres Hydraulikgerät (30) ausgebildet ist.

2. Vorrichtung nach Anspruch 1, **dadurch gekennzeichnet, dass** der erste und/oder zweite Leitungsarm (64; 70, 72) im Endbereich in eine quer zur radialen Erstreckung des Leitungsarms (64; 70, 72) sich ergebende Richtung abknickt, insbesondere dann parallel zur Drehachse (10c) verläuft.

3. Vorrichtung nach Anspruch 1 oder 2, **dadurch gekennzeichnet, dass** der erste Leitungsarm (64) integraler, fester Bestandteil des Zentralgehäuses (66) ist und/oder der zweite Leitungsarm (70, 72) integraler, fester Bestandteil des Zentralkörpers (68) ist.

4. Vorrichtung nach einem der vorangehenden Ansprüche, **dadurch gekennzeichnet, dass** der erste Leitungsarm (64) zumindest eine Durchgangsbohrung (50a) für die Aufnahme mindestens einer Schraube (50) zum Herstellen einer Schraubverbindung des ersten Gehäuseteils (10a) mit dem ersten Teil (20a) des Drehmotors (20) umfasst.

5. Vorrichtung nach Anspruch 4, **dadurch gekennzeichnet, dass** die Durchgangsbohrung (50a) im Endbereich des ersten Leitungsarms (64) angeordnet ist, der sich in eine Richtung parallel zur Drehachse erstreckt.

6. Vorrichtung nach einem der vorangehenden Ansprüche, **dadurch gekennzeichnet, dass** der zweite Leitungsarm (70, 72) zumindest eine Durchgangsbohrung (74) für die Aufnahme jeweils einer Schraube (52) zum Herstellen einer Schraubverbindung mit dem zweiten Teil (20b) des Drehmotors (20) umfasst.

7. Vorrichtung nach Anspruch 6, **dadurch gekennzeichnet, dass** die Durchgangsbohrung (74) im radial, von dem Zentralkörper (68) sich weg erstreckenden Bereich des zweiten Leitungsarmes (70, 72) angeordnet ist.

8. Vorrichtung nach einem der vorangehenden Ansprüche, **dadurch gekennzeichnet, dass** der erste Leitungsarm (64) die Leitung (56, 58) oder die Leitungen (56, 58) von der Drehdurchführung im Zentralgehäuse (66) und Zentralkörper (68) zum ersten Anschluss (42, 44) oder zu den ersten Anschlüssen (42, 44) umfasst.

9. Vorrichtung nach einem der vorangehenden Ansprüche, **dadurch gekennzeichnet, dass** der zweite Leitungsarm (70, 72) die Leitung (56, 58) oder die Leitungen (56, 58) von der Drehdurchführung im Zentralgehäuse (66) und Zentralkörper (68) zum zweiten Anschluss (38, 40) oder zu den zweiten Anschlüssen (38, 40) umfasst, vorzugsweise zwei zweite Leitungsarme (70, 72) mit jeweils einer Leitung (56, 58) vorgesehen sind, welche ausgehend von der Drehdurchführung in einem Winkel zueinander verlaufen.

10. Vorrichtung nach einem der vorangehenden Ansprüche, **dadurch gekennzeichnet, dass** das Zentralgehäuse (66) und/oder der Zentralkörper (68) im Wesentlichen eine zylindrische Grundform aufweist bzw. aufweisen.

11. Vorrichtung nach einem der vorangehenden Ansprüche, **dadurch gekennzeichnet, dass** das Zentralgehäuse (66) des ersten Gehäuseteils (10a) im Hinblick auf die Drehachse (10c) und die Montagerichtung außen angeordnet ist und der Zentralkörper (68) des zweiten Gehäuseteils (10b) innen angeordnet ist.

12. Vorrichtung nach einem der vorangehenden Ansprüche, **dadurch gekennzeichnet, dass** der Zentralkörper (68) eine Rückwandung (68a) aufweist, die in den zweiten Leitungsarm (70, 72) übergeht.

13. Vorrichtung nach einem der vorangehenden Ansprüche, **dadurch gekennzeichnet, dass** zwei Leitungen (56, 58) vorgesehen sind und für jede Leitung (56, 58) ein erster Anschluss (42, 44) und ein zweiter Anschluss (38, 40) vorgesehen sind, insbesondere die ersten Anschlüsse (42, 44) zueinander im Winkel, insbesondere V-förmig, angeordnet sind und/oder die zweiten Anschlüsse (38, 40) parallel zueinander ausgerichtet sind.

14. Vorrichtung nach einem der vorangehenden Ansprüche, **gekennzeichnet durch** eine maximale Erstreckung in Richtung der Drehachse (10c), welche kleiner ist, als die maximale Erstreckung quer zur Drehachse (10c), insbesondere kleiner als 50%, vorzugsweise 30%, vorzugsweise 20%, der maximalen Erstreckung quer zur Drehachse.

15. Drehmotor (20) mit einem Gehäuse (20a), zumindest einem in dem Gehäuse axial verschieblich aufgenommenen Kolben, der durch Beaufschlagung mit einem Druckmedium in einer Druckkammer der beidseitig angeordneten Druckkammern axial antreibbar ist sowie mit zumindest einer in dem Gehäuse (20a) axial fest, um eine Drehachse drehbar gelagerten Motorwelle (24), wobei der Kolben mit einer Wellendurchgangsausnehmung versehen ist, die Wellendurchgangsausnehmung und die Motorwelle (24) in Schraubeingriff miteinander stehen, und verdrehfest gegenüber dem Gehäuse (20a) geführt sind, sodass über das Druckmedium der Kolben axial bewegt wird, über die verdrehfeste Führung des Kolbens im Gehäuse (20a) und den Schraubeneingriff mit der Motorwelle (24) die axiale Bewegung des Kolbens in eine Schwenkbewegung der Motorwelle (24) umgesetzt wird, **gekennzeichnet durch** eine Vorrichtung (10) gemäß einem der vorangehenden Ansprüche, wobei der erste Teil (20a) des Drehmotors (20) durch das Gehäuse und der zweite Teil (20b) des Drehmotors durch die Motorwelle (24) und mit der Motorwelle (24) verbundenen Flansche (26, 28) gebildet ist.

16. Drehmotor nach Anspruch 15, **dadurch gekennzeichnet, dass** eine dem Gehäuse der Vorrichtung (10) zugeordnete Gewindebohrung vorgesehen ist, um eine Schraubverbindung zu ermöglichen und/oder zwei dem Gehäuse der Vorrichtung (10) zugeordnete Verdrehsicherungen vorgesehen sind, um eine Verdrehsicherung eines Gehäuseteils (10a) zu ermöglichen.

17. Drehmotor nach einem der Ansprüche 15 oder 16, **dadurch gekennzeichnet, dass** Ausnehmungen für den ersten Leitungsarm (64) und/oder zweiten Leitungsarm (70, 72) vorgesehen sind, in welche diese eingreifen.

18. Drehmotor nach einem der Ansprüche 15 bis 17, **dadurch gekennzeichnet, dass** das Gehäuse (20a) des Drehmotors (20) mit einem Anschlussrahmen (16, 18) für den Baggerarm (14) verbunden ist.

19. Drehmotor nach einem der Ansprüche 15 bis 18, **dadurch gekennzeichnet, dass** die Flansche (26, 28) mit einem Schnellwechsler (30) und der Schnellwechsler (30) über die zweiten Anschlüsse (38, 40) mit der Vorrichtung (10) hydraulisch verbunden sind.

20. Drehmotor nach einem der Ansprüche 15 bis 19, **dadurch gekennzeichnet, dass** auf jeder Stirnseite des Drehmotors (20) eine Vorrichtung (10) angeordnet ist, sodass zwei verschiedene hydraulische Geräte dem Drehmotor (20) konstruktiv in Reihe nachgeordnet werden können.

## Claims

1. Device (10) for conducting hydraulic fluid from a first connection (42, 44) to a second connection (38, 40) via at least one conduit line (56, 58), which device has a housing composed of a first housing part (10a) having the first connection (42, 44) and a second housing part (10b) having the second connection (38, 40), which parts can be rotated relative to one another about an axis of rotation (10c) and have a hydraulic rotary union for transferring the hydraulic oil, which first housing part (10a) has a central housing (66), which second housing part (10b) has a central body (68), with the central housing (66) and the central body (68) mutually engaging one another and being rotatably mounted relative to each another, **characterized by** an arrangement for detachable attachment to a hydraulic torque motor (20) having hydraulic connections (46, 48) that are separate from the device (10) for hydraulic operation of the torque motor (20), with securing means (50, 52) being provided for securing the device (10) laterally to the torque motor (20) which comprises a first part (20a) and a second part (20b) that can be pivoted relative to the first part (20a), with at least one respective conduit arm (64; 70, 72) extending substantially radially away from the central housing (66) and from the central body (68), in relation to the axis of rotation (10c), and in that the second housing part (10b) comprises securing means (52) which are associated with the second part (20b) of the torque motor (20) and which are adapted to be detachably connected to the torque motor (20) via the securing means (52), with the second connection (38, 40) being designed for use with another hydraulic device (30) adapted to be connected to the torque motor ( 20).

2. Device according to claim 1, **characterized in that** the end region of the first and/or second conduit arms each (64; 70, 72) is bent in a direction transverse to the radial extent of the conduit arm (64; 70, 72), in particular then extends parallel to the axis of rotation (10c).

3. Device according to any one of claims 1 or 2 above, **characterized in that** the first conduit arm (64) is an integral fixed component of the central housing (66), and/or that the second conduit arm (70, 72) is an integral fixed component of the central body (68).

4. Device according to any one of the preceding claims, **characterized in that** the first conduit arm (64) comprises at least one through hole (50a) for receiving at least one screw (50) used to make a screw connection between the first housing part (10a) and the first part (20a) of the torque motor (20).

5. Device according to claim 4, **characterized in that** the through hole (50a) is arranged in the end portion of the first conduit arm (64) that extends in a direction parallel to the axis of rotation.

6. Device according to any one of the preceding claims, **characterized in that** the second conduit arm (70, 72) comprises at least one through hole (74) for receiving a respective screw (52) used to make a screw connection with the second part (20b) of the torque motor (20).

7. Device according to claim 6, **characterized in that** the through hole (74) is arranged in the region of the second conduit arm (70, 72) that radially extends away from the central body (68).

8. Device according to any one of the preceding claims, **characterized in that** the first conduit arm (64) comprises the one or plural conduit(s) (56, 58) that extend from the rotary union in the central housing (66) and the central body (68) to the one or plural first connection(s) (42, 44).

9. Device according to any one of the preceding claims, **characterized in that** the second conduit arm (70, 72) comprises the one or plural conduit(s) (56, 58) that extend from the rotary union in the central housing (66) and the central body (68) to the one or plural second connection(s) (38, 40), preferably two second conduit arms (70, 72) are provided, each with a conduit (56, 58), which arms extend at an angle to each other starting from the rotary union.

10. Device according to any one of the preceding claims, **characterized in that** the central housing (66) and/or the central body (68) is or are of a substantially cylindrical basic shape.

11. Device according to any one of the preceding claims, **characterized in that** the central housing (66) of the first housing part (10a) is arranged on the outside with regard to the axis of rotation (10c) and the mounting direction, and that the central body (68) of the second housing part (10b) is arranged on the inside.

12. Device according to any one of the preceding claims, **characterized in that** the central body (68) has a rear wall (68a) which merges into the second conduit arm (70, 72).

13. Device according to any one of the preceding claims, **characterized in that** two conduits (56, 58) are provided, and **in that** for each conduit (56, 58), a first connection (42, 44) and a second connection (38, 40) are provided, wherein, in particular, the first connections (42, 44) are arranged at an angle to one another, in particular in the shape of a V, and/or the second connections (38, 40) are arranged parallel to each other.

14. Device according to any one of the preceding claims, **characterized by** a maximum extent in the direction of the axis of rotation (10c), which extent is smaller than the maximum extent transverse to the axis of rotation (10c), in particular smaller than 50%, preferably 30%, preferably 20%, of the maximum extent transverse to the axis of rotation.

15. Torque motor (20) having a housing (20a), at least one piston which is accommodated axially displaceably in the housing and which can be driven axially by the action of a pressure medium in a pressure chamber of the pressure chambers arranged on either side, and having at least one motor shaft (24) which is mounted in the housing (20a) so as to be axially fixed and rotatable about an axis of rotation, said piston being provided with a shaft hole, said shaft hole and said motor shaft (24) being in screw engagement with one another and being guided in a rotationally fixed manner relative to the housing (20a), so that the action of the pressure medium causes the piston to move axially, the axial movement of the piston is converted into a pivoting movement of the motor shaft (24) via the rotationally fixed guidance of the piston in the housing (20a) and the screw engagement with the motor shaft (24), **characterized by** a device (10) according to any one of the preceding claims, in which the first part (20a) of the torque motor (20) is formed by the housing, and the second part (20b) of the torque motor is formed by the motor shaft (24) and flanges (26, 28) connected to the motor shaft (24).

16. Torque motor according to claim 15, **characterized in that** a threaded bore associated with the housing of the device (10) is provided to allow a screw connection, and/or **in that** two anti-rotation devices associated with the housing of the device (10) are provided to secure one housing part (10a) against rotation.

17. Torque motor according to any one of claims 15 to 16 above, **characterized in that** recesses are provided for the first conduit arm (64) and/or the second conduit arm (70, 72) which arm(s) engage in said recesses.

18. Torque motor according to any one of claims 15 to 17, **characterized in that** the housing (20a) of the torque motor (20) is connected to an adapter frame (16, 18) for the excavator arm (14).

19. Torque motor according to any one of claims 15 to 18, **characterized in that** the flanges (26, 28) are connected to a quick coupler (30), and that the quick coupler (30) is hydraulically connected to the device (10) via the second connections (38, 40).

20. Torque motor according to any one of claims 15 to 19, **characterized in that** a device (10) is arranged on each end face of the torque motor (20), so as to allow two different hydraulic devices to be structurally arranged in series downstream of the torque motor (20).

## Revendications

1. Dispositif (10) pour conduire un liquide hydraulique d'un premier raccord (42, 44) à un deuxième raccord (38, 40) par l'intermédiaire d'au moins une conduite (56, 58), avec un boîtier, lequel comprend une première partie de boîtier (10a) avec le premier raccord (42, 44) et une deuxième partie de boîtier (10b) avec le deuxième raccord (38, 40), lesquelles peuvent être amenées en rotation l'une par rapport à l'autre autour d'un axe de rotation (10c) et présentent un passage tournant hydraulique pour transmettre l'huile hydraulique, dans lequel la première partie de boîtier (10a) présente un boîtier central (66), la deuxième partie de boîtier (10b) présente un corps central (68), le boîtier central (66) et le corps central (68) s'interpénètrent et sont montés en rotation l'un par rapport à l'autre, **caractérisé par** une réalisation à fixer de manière détachable sur un moteur rotatif (20) hydraulique avec des raccords (46, 48) hydrauliques séparés du dispositif (10) pour le fonctionnement hydraulique du moteur rotatif (20), dans lequel des moyens de fixation (50, 52) sont prévus pour fixer le dispositif (10) latéralement sur le moteur rotatif (20), qui comprend une première partie (20a) et une deuxième partie (20b) pouvant pivoter par rapport à la première partie (20a), dans lequel au moins respectivement un bras de conduite (64 ; 70, 72) s'étend sensiblement radialement à l'écart du boîtier central (66) et du corps central (68) par rapport à l'axe de rotation (10c) et que la deuxième partie de boîtier (10b) comprend des moyens de fixation (52), lesquels sont associés à la deuxième partie (20b) du moteur rotatif (20) et le dispositif (10) peut être relié de manière détachable au moteur rotatif (20) par l'intermédiaire des moyens de fixation (52), dans lequel le deuxième raccord (38, 40) est réalisé pour un autre appareil hydraulique (30) pouvant être relié au moteur rotatif (20).

2. Dispositif selon la revendication 1, **caractérisé en ce que** le premier et/ou deuxième bras de conduite (64 ; 70, 72) se courbe dans la zone d'extrémité dans une direction s'exerçant transversalement par rapport à l'étendue radiale du bras de conduite (64 ; 70, 72), en particulier s'étend alors parallèlement à l'axe de rotation (10c).

3. Dispositif selon la revendication 1 ou 2, **caractérisé en ce que** le premier bras de conduite (64) fait partie intégrante du boîtier central (66) et/ou le deuxième bras de conduite (70, 72) fait partie intégrante du corps central (68).

4. Dispositif selon l'une quelconque des revendications précédentes, **caractérisé en ce que** le premier bras de conduite (64) comprend au moins un trou débouchant (50a) pour le logement d'au moins une vis (50) pour établir une liaison vissée de la première partie de boîtier (10a) à la première partie (20a) du moteur rotatif (20).

5. Dispositif selon la revendication 4, **caractérisé en ce que** le trou débouchant (50a) est disposé dans la zone d'extrémité du premier bras de conduite (64), qui s'étend dans une direction parallèle à l'axe de rotation.

6. Dispositif selon l'une quelconque des revendications précédentes, **caractérisé en ce que** le deuxième bras de conduite (70, 72) comprend au moins un trou débouchant (74) pour le logement de respectivement une vis (52) pour établir une liaison vissée avec la deuxième partie (20b) du moteur rotatif (20).

7. Dispositif selon la revendication 6, **caractérisé en ce que** le trou débouchant (74) est disposé dans la zone du deuxième bras de conduite (70, 72) s'étendant radialement à l'écart du corps central (68).

8. Dispositif selon l'une quelconque des revendications précédentes, **caractérisé en ce que** le premier bras de conduite (64) comprend la conduite (56, 58) ou les conduites (56, 58) à partir du passage tournant dans le boîtier central (66) et corps central (68) vers le premier raccord (42, 44) ou vers les premiers raccords (42, 44).

9. Dispositif selon l'une quelconque des revendications précédentes, **caractérisé en ce que** le deuxième bras de conduite (70, 72) comprend la conduite (56, 58) ou les conduites (56, 58) à partir du passage tournant dans le boîtier central (66) et corps central (68) vers le deuxième raccord (38, 40) ou vers les deuxièmes raccords (38, 40), de préférence deux deuxièmes bras de conduite (70, 72) avec respectivement une conduite (56, 58) sont prévus, lesquels s'étendent à un angle l'un par rapport à l'autre à partir du passage tournant.

10. Dispositif selon l'une quelconque des revendications précédentes, **caractérisé en ce que** le boîtier central (66) et/ou le corps central (68) présente ou présentent sensiblement une forme de base cylindrique.

11. Dispositif selon l'une quelconque des revendications précédentes, **caractérisé en ce que** le boîtier central (66) de la première partie de boîtier (10a) compte-tenu de l'axe de rotation (10c) et de la direction de montage est disposé à l'extérieur et le corps central (68) de la deuxième partie de boîtier (10b) est disposé à l'intérieur.

12. Dispositif selon l'une quelconque des revendications précédentes, **caractérisé en ce que** le corps central (68) présente une paroi arrière (68a), qui se prolonge en le deuxième bras de conduite (70, 72).

13. Dispositif selon l'une quelconque des revendications précédentes, **caractérisé en ce que** deux conduites (56, 58) sont prévues et pour chaque conduite (56, 58) un premier raccord (42, 44) et un deuxième raccord (38, 40) sont prévus, en particulier les premiers raccords (42, 44) sont disposés l'un par rapport à l'autre de manière à former un angle, en particulier en forme de V, et/ou les deuxièmes raccords (38, 40) sont orientés parallèlement l'un à l'autre.

14. Dispositif selon l'une quelconque des revendications précédentes, **caractérisé par** une extension maximale en direction de l'axe de rotation (10c), laquelle est inférieure à l'extension maximale transversalement par rapport à l'axe de rotation (10c), en particulier inférieure à 50 %, de préférence 30 %, de préférence 20 %, de l'extension maximale transversalement par rapport à l'axe de rotation.

15. Moteur rotatif (20) avec un boîtier (20a), au moins un piston logé de manière axialement coulissante dans le boîtier, qui peut être entraîné axialement par sollicitation avec un milieu sous pression dans une chambre de pression des chambres de pression disposées de part et d'autre ainsi qu'avec au moins un arbre de moteur (24) monté axialement fixement dans le boîtier (20a), de manière à pouvoir tourner autour d'un axe de rotation, dans lequel le piston est pourvu d'un évidement de passage d'arbre, l'évidement de passage d'arbre et l'arbre de moteur (24) sont en prise vissée l'un avec l'autre, et sont guidés de manière solidaire en rotation par rapport au boîtier (20a), de sorte que le piston est déplacé axialement par l'intermédiaire du milieu sous pression, le mouvement axial du piston est converti en un mouvement de pivotement de l'arbre de moteur (24) par l'intermédiaire du guidage solidaire en rotation du piston dans le boîtier (20a) et de la prise vissée avec l'arbre de moteur (24), **caractérisé par** un dispositif (10) selon l'une quelconque des revendications précédentes, dans lequel la première partie (20a) du moteur rotatif (20) est formée par le boîtier et la deuxième partie (20b) du moteur rotatif par l'arbre de moteur (24) et des brides (26, 28) reliées à l'arbre de moteur (24).

16. Moteur rotatif selon la revendication 15, **caractérisé en ce qu'**un trou taraudé associé au boîtier du dispositif (10) est prévu, afin de permettre une liaison vissée et/ou deux moyens de blocage en rotation associés au boîtier du dispositif (10) sont prévus, afin de permettre un blocage en rotation d'une partie de boîtier (10a).

17. Moteur rotatif selon l'une quelconque des revendications 15 ou 16, **caractérisé en ce que** des évidements pour le premier bras de conduite (64) et/ou deuxième bras de conduite (70, 72) sont prévus, dans lesquels ceux-ci s'insèrent.

18. Moteur rotatif selon l'une quelconque des revendications 15 à 17, **caractérisé en ce que** le boîtier (20a) du moteur rotatif (20) est relié à un cadre de raccord (16, 18) pour le bras d'excavateur (14).

19. Moteur rotatif selon l'une quelconque des revendications 15 à 18, **caractérisé en ce que** les brides (26, 28) sont reliées de manière hydraulique à une attache rapide (30) et l'attache rapide (30) au dispositif (10) par l'intermédiaire des deuxièmes raccords (38, 40).

20. Moteur rotatif selon l'une quelconque des revendications 15 à 19, **caractérisé en ce qu'**un dispositif (10) est disposé sur chaque face frontale du moteur rotatif (20), de sorte que deux appareils hydrauliques différents peuvent être structuralement disposés en série en aval du moteur rotatif (20).
